# EUROPEAN PATENT SPECIFICATION

(11) **EP 3 914 886 B1**
(45) Date of publication and mention of the grant of the patent: **31.08.2022**
(21) Application number: 20703093.3
(22) Date of filing: 20.01.2020
(51) Int. Cl.: G01M 1/32, B26D 7/30, F16F 15/34, F16F 15/36, G01M 1/02

(54) **MACHINE FOR THE APPLICATION OF COUNTERWEIGHTS TO WHEEL RIMS**
MASCHINE ZUM AUFBRINGEN VON GEGENGEWICHTEN AN DEN FELGEN VON RÄDERN
MACHINE POUR APPLIQUER DES CONTREPOIDS SUR LES JANTES DE ROUES

(30) Priority: 23.01.2019 IT 201900001015
(43) Date of publication of application: 01.12.2021
(73) Proprietor: Star S.r.l., 04100 Latina (IT)
(72) Inventor: PETTONI, Manuel, 04100 Latina (IT)
(74) Representative: Tiburzi, Andrea
(86) International application number: PCT/IT2020/050005
(87) International publication number: WO 2020/152727

(56) References cited:
- WO-A1-2017/062445
- US-A1- 2016 320 260
- US-A1- 2017 247 221
- US-A1- 2018 031 438

## Description

This invention relates to a machine for applying counterweights to the rims of wheels.

More specifically, the invention relates to a machine which allows the automated application of adhesive counterweights in the inner and outer parts of the rims of wheels for motor vehicles, in the quantity defined by the balancing station installed upstream of the machine, with the aim of balancing the dynamic imbalance of the wheels during their rotation.

Currently, in order to annul the unbalances between rim and tyre one or more adhesives are normally applied manually on the rims of the wheel.

The unbalancing masses normally derive from the intrinsic "defects" of the production processes for making the tyres and rims, which do not allow suitable products to be obtained in terms of weight and roundness, thereby generating the imbalances in the overall tyre and relative rim.

The positioning of the balancing masses on the rim is carried out following coupling of the rim with the relative tyre, on threaded rings fitted on a rotary shaft of the balancing machine.

Once the wheel to be balanced is positioned on the balancing machine and rotated by the latter, a display will show where to apply the weights on the rim to annul the imbalances.

The manual operation described above shows the limitations of this working step, firstly due to the tolerances which are inevitably determined in the coupling between rim and threaded ring of the balancing machine, resulting in a condition of non-repeatability in the relative positioning of the two elements and therefore potential imbalances.

Moreover, the same positioning of the adhesive balancing masses is performed by strictly manual operations, with the inevitable uncertainties which result from this process. Examples of machines designed for balancing a wheel are described in US 2016/320260, US 2016/320260, US 2018/031438 and WO 2017/062445.

The aim of the invention is to provide a machine according to claim 1 which allows the automated application of counterweights to the rims of wheels for motor vehicles, in order to balance the dynamic imbalance of the wheels during their rotation.

Another aim of the invention is to provide a machine tool which allows the counterweights to be efficiently applied to the rims of the wheels.

Another aim of the invention is to provide a machine for applying counterweights to the rims of the wheels which resolves the problems and overcomes the drawbacks of the prior art.

The specific object of the invention is therefore a machine for applying at least one counterweight to a rim of a wheel to balance said wheel, wherein said at least one counterweight is a part of a strip comprising a plurality of counterweights, which are placed next to one another and provided with a respective adhesive side, and a protective film which is removable and placed on said adhesive side of said counterweights; said machine comprising: a frame; a first accumulating system configured for accumulating said strip and comprising at least one first element having a fixed position in said frame, on which said strip is able to be at least partly wound, and at least one second element, on which said strip is able to be at least partly wound, which is movable relative to said at least one first element between a position of minimum storage of said strip, where said at least one second element is at a first distance from said at least one first element, and a position of maximum storage of said strip where said at least one second element is at a second distance, which is larger than said first distance, from said at least one first element; separating means configured for progressively separating, in use, said protective film from said plurality of counterweights and operatively placed downstream of said first accumulating system; applying means configured for applying, in use, at least one counterweight to a rim and operatively placed downstream of said separating means; and a second accumulating system which is operatively placed downstream of said separating means and configured to accumulate, in use, in a variable fashion said protective film, said second accumulating system comprising at least one third element having a fixed position in said frame, on which said protective film is able to be at least partly wound, and at least one fourth element, on which said protective film is able to be at least partly wound, which is movable relative to said at least one third element between a position of minimum storage of said protective film, where said at least one fourth element is at a third distance from said at least one third element, and a position of maximum storage of said protective film where said at least one fourth element is at a fourth distance, which is larger than said third distance, from said at least one third element, such that a storage of said plurality of counterweights is allowed in said first accumulating system and a storage of said protective film is allowed in said second accumulating system on the basis of the frequency of application of said counterweights on said rim by said applying means.

Advantageously according to the invention, said machine can comprise advancing means to make, in use, said strip advance from said first accumulating system to said separating means, and first stopping means to stop said strip advancing towards said separating means.

Further according to the invention, the machine can comprise a first sensor for detecting the time when said first accumulating system is in the configuration of minimum storage of said strip, and a second sensor for detecting the time when said first accumulating system is in the configuration of maximum storage of said strip, said first sensor and said second sensor being operatively connected with said advancing means and said first stopping means.

Conveniently according to the invention, said machine can comprise pulling means to pull, in use, said protective film making the protective film advance from said separating means to said second accumulating system, and second stopping means to stop said protective film advancing from said separating means to said second accumulating system.

Again according to the invention, said machine can comprise a third sensor for detecting the time when said second accumulating system is in the configuration of minimum storage of said protective film, and a fourth sensor for detecting the time when said second accumulating system is in the configuration of maximum storage of said protective film, said third sensor and said fourth sensor being operatively connected with said pulling means and to said second stopping means.

Advantageously according to the invention, said machine can comprise a cutting device which is operatively placed between said separating means and said applying means and configured to cut said plurality of counterweights before applying at least one counterweight to said rim.

Preferably, according to the invention, said cutting device comprises a blade which is connectable with an electric power source to allow said blade to heat up when an electric power passes through said blade.

Conveniently according to the invention, said applying means comprise at least one support which is provided with a substantially arc-shaped resting surface which is configured for receiving at least one counterweight, at least one magnetic element being provided in said resting surface to hold, in use, said at least one counterweight on said resting surface.

Further according to the invention, said at least one support can be movable along a first axis which is substantially orthogonal to an advancing direction of said plurality of counterweights from said separating means towards said at least one support.

Again according to the invention, said applying means can comprise actuating means which are connected with said at least one support and configured to move said at least one support along a second axis such as to move close to or away from, in use, said at least one support relative to said rim.

The invention is now described, by way of example and without limiting the scope of the invention, with reference to the accompanying drawings which illustrate preferred embodiments of it, in which:
- Figure 1 shows an assembly drawing of a machine according to the invention for applying counterweights to the rims of wheels for motor vehicles;
- Figure 2 shows a strip of weights for applying to the rims by means of a machine according to the invention;
- Figure 3 shows a first accumulating system of the machine of Figure 1;
- Figure 4 is a partial side view showing the accumulating system in a first operating configuration;
- Figure 5 is a partial side view showing the accumulating system in a second operating configuration;
- Figure 6 is a partial side view showing the same accumulating system in a third operating configuration;

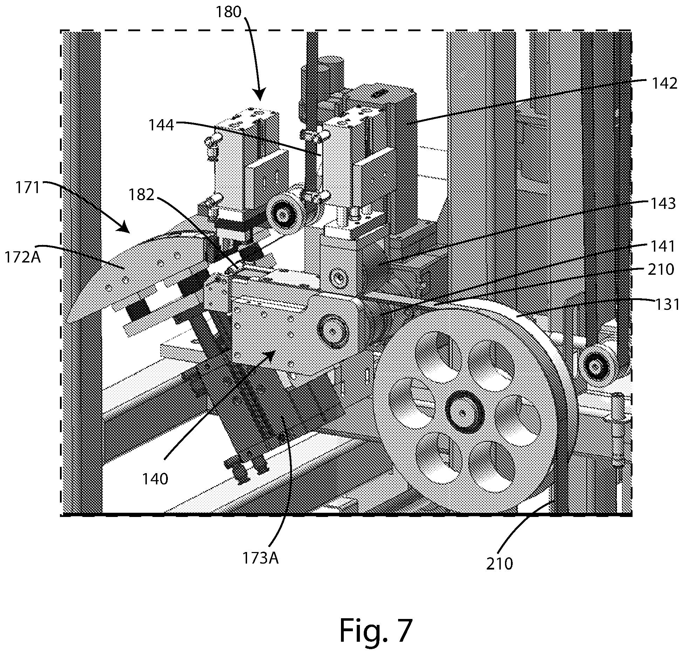

- Figure 7 is a detailed axonometric view taken from Figure 1, which shows an operating unit of the machine according to the invention;

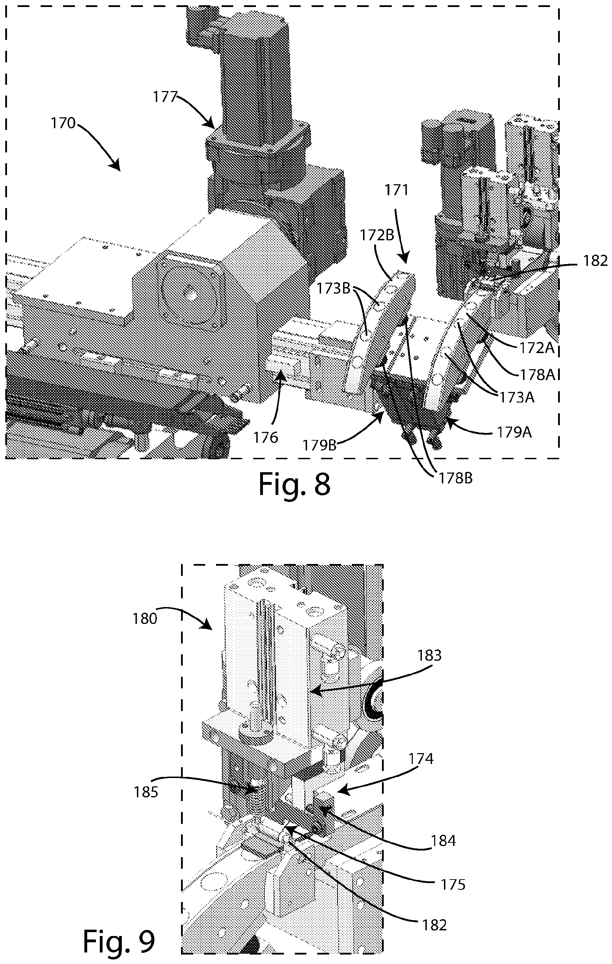

- Figure 8 is an axonometric view showing some operational components of the above-mentioned machine, acting in conjunction with each other;
- Figure 9 shows a detail of Figure 8;

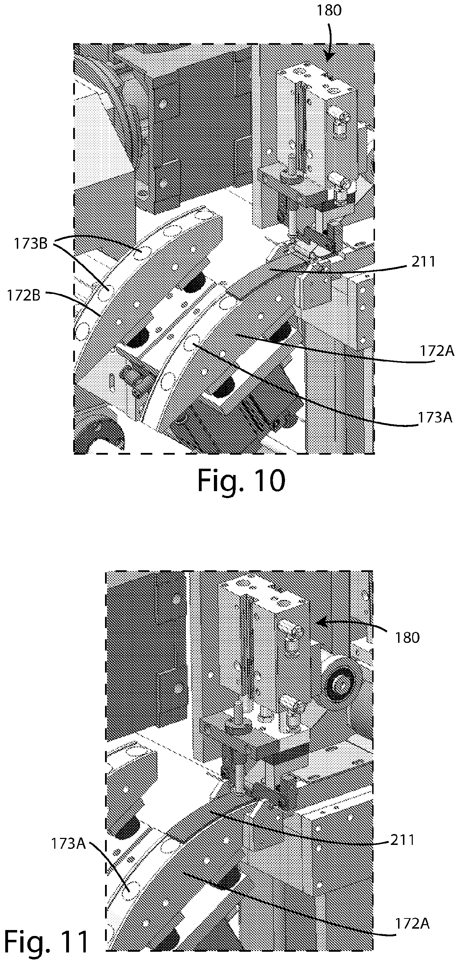

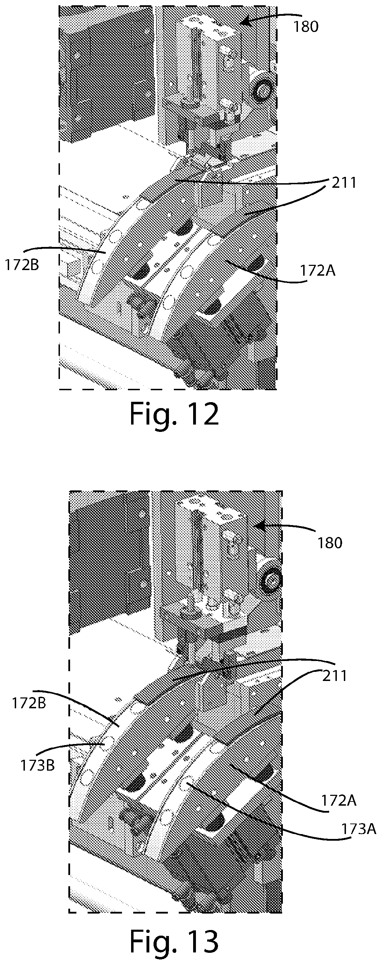

- Figures 10 to 13 show a unit of the machine according to the invention, provided for applying weights on a rim, in various operating steps;

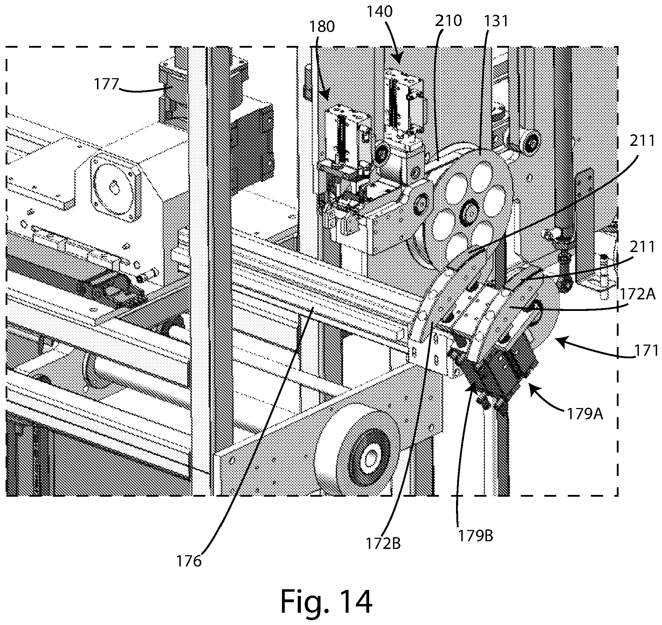

- Figure 14 is a further partial axonometric view of the machine shown in Figure 1;

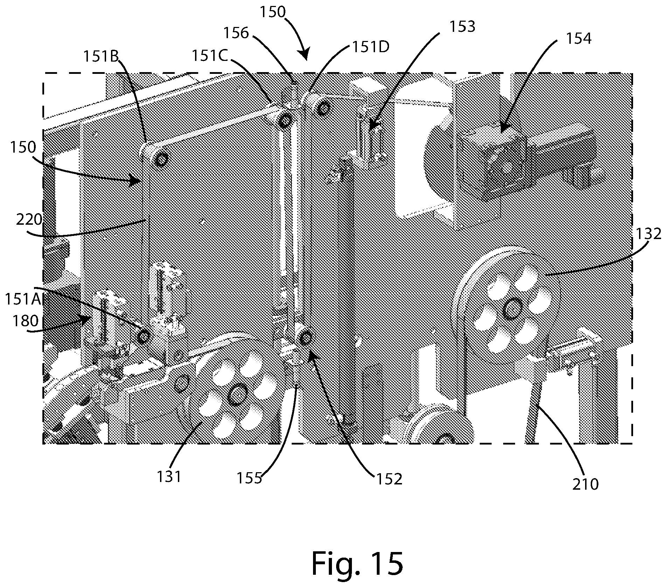

- Figure 15 shows a second accumulating system of the machine according to the invention;
- Figure 16 is a partial side view showing the second accumulating system in a first operating configuration;
- Figure 17 is a partial side view showing said second accumulating system in a second operating configuration;
- Figure 18 shows a device for cleaning the machine according to the invention, in a rest position; and
- Figure 19 shows the same cleaning device in an operating position.

When an element is introduced it is always meant that there can be "at least one" or "one or more".

With reference to the accompanying drawings, the numeral 100 indicates an automatic machine according to the invention, for the application of adhesive counterweights to the rims of wheels for motor vehicles.

In particular, the above-mentioned machine 100 comprises a frame 110 for supporting the structure of the machine 100 and a motor-driven system 120 for unwinding a reel 121, for example of 30 kg, that is, a spool 121' on which is wound a strip of weights 210, where the weights are made of metallic material.

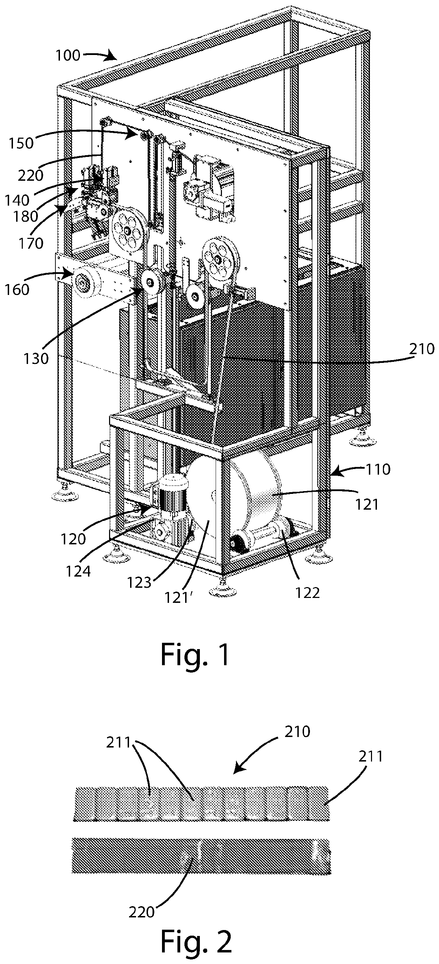

With specific reference to Figure 2, the weights 211 each have a parallelepiped shape and are connected together in sequence, that is, alongside each other, to form a strip of weights 210.

On one of the two faces of the strip of weights 210 there is an adhesive layer on which is positioned a liner, that is to say, a removable protective film 220.

The reel 121 is loaded on a set consisting of an idle axis 122 and a motor-driven axis 123 positioned parallel to said idle axis 122 and connected to a gear motor 124.

The gear motor 124 is preferably asynchronous, but the same function could be performed by a synchronous motor.

The gear motor 124 rotates the motor-driven axis 123 about the relative central axis and therefore unwinds the reel 121 which rests on it.

According to this embodiment, the machine 100 is designed to use a single reel, which, once emptied, is removed and replaced with a new one.

The operation for changing the reel 121 implies the need to stop the motor-driven axis 123, with the aim of allowing it to be changed.

In order to change the reel 121 without generating a condition for stopping the machine and the consequent loss of productivity, a weights accumulating system 130 is provided, described below, which allows an intermittent operating step to be generated for feeding the reel 121, in such a way that when a special sensor detects the "minimum" level of weights in the reel 121, the operator can safely change the reel 121 during operation of the machine 100, using the buffer generated by the operation weights accumulating system 130.

According to an alternative embodiment of the invention, the machine 100 is also designed to receive a double reel feeding device, each with an independent drive and unwinding system, in order to increase the operating autonomy of the machine 100.

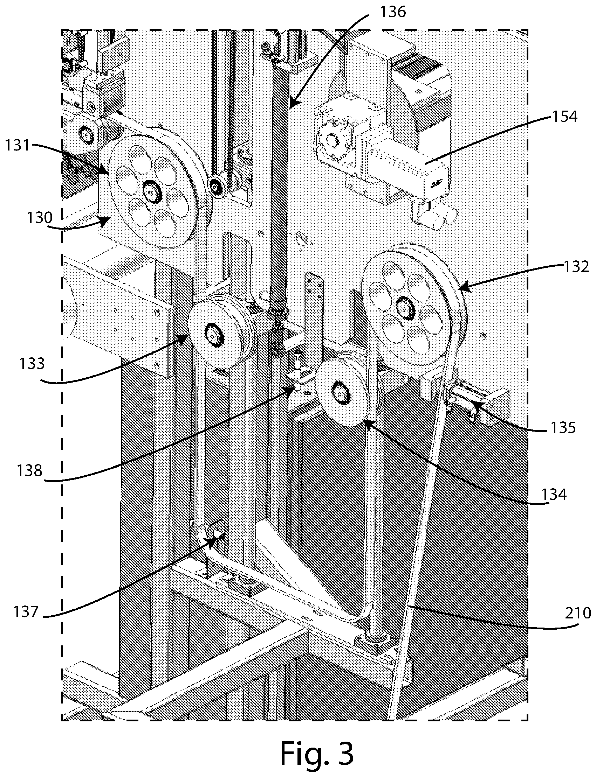

Figure 3 illustrates in detail the weights accumulating system 130.

The weights accumulating system 130 comprises a first upper pulley 132 and a second upper pulley 131 mounted in a rotatable manner, in idle mode, on the frame 110 about respective axes of rotation which are fixed and mutually parallel.

Between the first upper pulley 132 and the second upper pulley 131 there are also, beneath the latter, a first lower pulley 134 and a second lower pulley 133 mounted in a rotatable manner, in idle mode, about respective axes of rotation, at the ends of a movable bar 133' constrained to move vertically by means of a system of vertical guides 134'.

The weights accumulating system 130 also comprises a piston-cylinder system 136 positioned above and connected to the movable bar 133'.

In particular, the above-mentioned piston-cylinder system 136 is movable between a configuration of minimum extraction, wherein the first lower pulley 134 and the second lower pulley 133 are in a raised position, that is, at a first distance with respect to the first upper pulley 132 and to the second upper pulley 131, and a position of maximum extraction, wherein the first lower pulley 134 and the second lower pulley 133 are in a lowered position, that is, at a second distance, greater then the first distance, with respect to the first upper pulley 132 and the second upper pulley 131.

Moreover, the first upper pulley 132 and the second upper pulley 131, as well as the first lower pulley 134 and the second lower pulley 133, are positioned above the reel 121 in such a way that the strip of weights 210 coming out from said reel 121 is partial wound, in sequence, on the first upper pulley 132, on the lower pulley 134, on the second lower pulley 133 and on the second upper pulley 131, forming a "U" in the stretch of said strip between the first upper pulley 132 and the second upper pulley 131.

At the stretch of the strip of weights 210 between the reel 121 and the first upper pulley 132 there is a stopping device 135 movable between a stop position and a release position, for selectively stopping the strip of weights 210.

Close to the piston-cylinder system 136 there is a first optical sensor 138 for detecting when the weights accumulating system 130 is in the condition of minimum storage, that is, when the quantity of weights between the first upper pulley 132 and the second upper pulley 131 is a minimum.

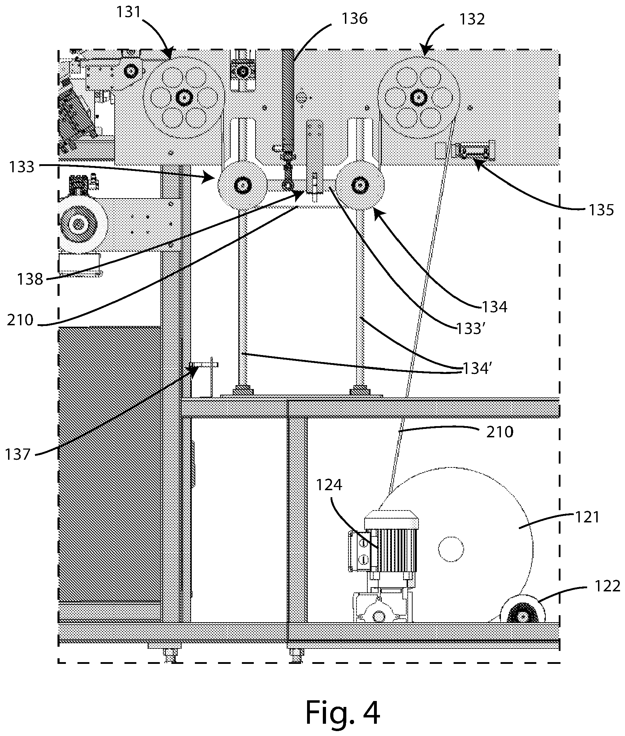

In particular, this minimum storage condition occurs when the first optical sensor 138 detects the presence of the stretch of the strip of weights 210 between the first lower pulley 134 and the second lower pulley 133, that is, when the latter is located in the respective raised position shown in Figure 4.

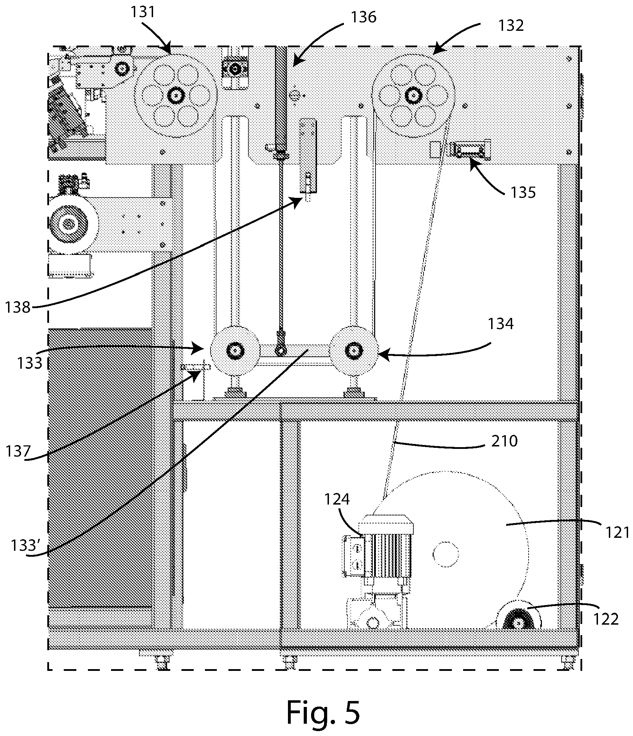

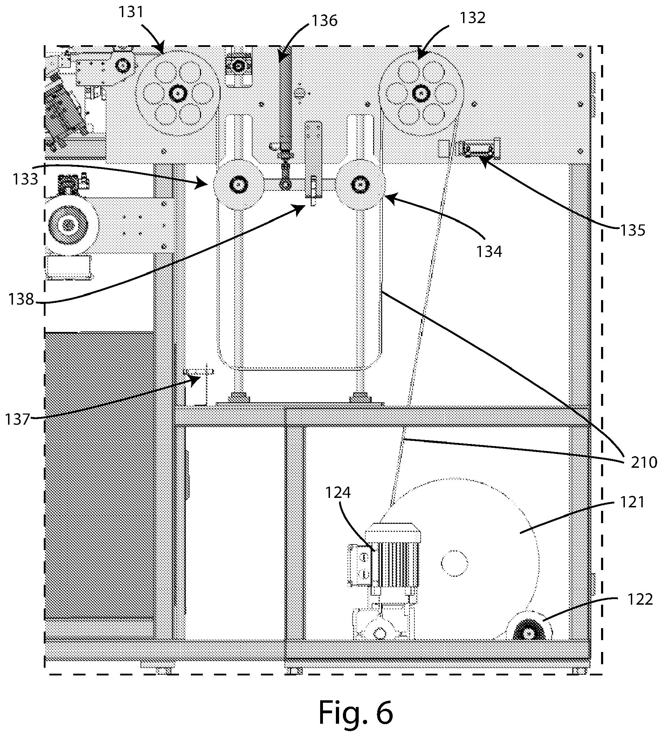

On the frame 110 there is also a second optical sensor 137 installed in a position such as to detect when the weights accumulating system 130 is in the condition of maximum storage of the weights, that is, when the quantity of weights between the first upper pulley 132 and the second upper pulley 131 is a maximum (se Figures 5 and 6).

Downstream of the second upper pulley 131 advancing means 140 are fitted on the frame 110 to allow the feeding of weights leaving said second upper pulley 131.

In particular, the advancing unit 140 comprises a lower drive wheel 141 controlled by a synchronous gear motor 142, and by an upper contrast wheel 143 activated, vertically, by a pneumatic cylinder 144 pushing against the underlying lower drive wheel 141.

The stretch of the strip of weights 210 coming out from the second upper pulley 131 is passed, with the protective film 220 facing upwards, between the upper contrast wheel 143 and the lower drive wheel 141, which rotating about the relative axis drives said strip of weights 210.

Downstream of the advancing means 140 there is a separation and cutting system 180 to allow the separation of the protective film 220 from relative weights 211 and the cutting of the latter.

More specifically, the separation and cutting system 180 comprises a separating unit 181 located in a position such as to intercept the strip of weights 210 between the weights 211 and the respective protective film 220 to carry out a progressive separation during the feeding of the strip of weights 210 by the advancing means 140 towards the separation and cutting system 180.

At the above-mentioned separating unit 181 there is also drive roller 182, rotatable in an idle fashion, for diverting the protective film 220 towards a second accumulating system 150 for the accumulation of the latter, which is described in more detail below.

The separation and cutting system 180 also includes a cutting device 174 comprising a cutting element 175 with a hot blade, that is, a blade kept at a high temperature by the passage of electric current and which can be activated, vertically, by means of a pneumatic actuator 183.

The type of heating used allows, from the operator panel, the adjustment of the temperature of the blade by acting on the parameters of the current passing in the circuit.

Preferably, the optimum cutting temperature for the type of adhesive used is between 240 °C and 290 °C, in particular between 260 °C and 280 °C, even more preferably approximately 270 °C.

Moreover, by bringing the blade to a temperature close to 400 °C, it is possible to clean it of the impurities which remain attached, given that the self-combustion of these parts occurs at these temperatures.

With regard to the cutting device 174, it was decided to use the hot blade since, currently, it is the one which guarantees the best results in terms of quality and repeatability of the cut, but it is also evident that the same function can be performed by means of different systems, such as, for example: a cold blade which can be activated, from above or from the side with respect to the strip of weights to be cut, using a pneumatic or electric actuator; a rotary blade; tearing of the strip of weights which can be achieved by blocking an end and moving the other end away by means of a pneumatic actuator; or by using a laser cutter.

The cutting device 174 also comprises a sprung compensation system 184 to allow the cutting element 175, that is, the blade, to follow the deformations induced by the temperature.

Downstream of the separation and cutting system 180 there is an application system 170 for applying weights 211 to the rim of the wheel.

The applying system 170 comprises, in particular, an application device 171 mounted on a slide 176 which is movable, by means of a synchronous gear motor 177, along a horizontal axis substantially perpendicular to the feed direction of the strip of weights 210 coming out from the separation and cutting system 180.

The application device 171 in turn comprises a first supporting element 172A and a second supporting element 172B arranged parallel to each other and both having an upper supporting surface with an arc shaped profile.

At the upper surfaces of the first supporting element 172A and the second supporting element 172B there are, respectively, a first plurality of electromagnets 173A and a second plurality of electromagnets 173B which carry out the function of keeping the weights 211, which transit on the first supporting element 172A and on the second supporting element 172B, adherent to the upper surfaces.

The application device 171 also includes a first linear actuator 179A and a second linear actuator 179B connected, respectively, to the lower part of the first supporting element 172A and the second supporting element 172B to allow the movement upwards and downwards.

Between said supporting elements 172A, 172B and the relative linear actuators 179A, 179B there are also, respectively, a first compliant support 178A and a second compliant support 178B, both made of elastic material, to allow the adaptation of the weights 21 to the surfaces of the rim during the relative application.

Between the separation and cutting system 180 and the application device 171 there is also a sprung tip 185 acting vertically on the drive roller 182 in such a way as to guarantee that during the step of cutting the weight 211, the latter remains adherent to the electromagnet 173A, 173B integrated in the supporting elements 172A, 172B.

The above-mentioned second accumulating system 150 comprises a fifth pulley 151A mounted on the frame 110 rotatable in an idle fashion about an axis of rotation which is fixed and located in a position which is raised and withdrawn with respect to the drive roller 182, in such a way that this fifth pulley 151A diverts upwards the protective film 220 separated from the relative weights 211 by the separating unit 181.

The same accumulating system 150 also comprises a sixth pulley 151B, a seventh pulley 151C and an eighth pulley 151D mounted on the frame 110 which are rotatable, in an idle fashion, about respective axes of rotation which are fixed and located substantially at the same level, higher than that of the above-mentioned fifth pulley 151A.

Between the seventh pulley 151C and the eight pulley 151D there is also a ninth pulley 152 rotatable in an idle fashion about the relative axis of rotation and mounted on a respective support 152' constrained to move vertically along a vertical guide 152" made on the frame 110, in such a way that the protective film 220 coming out from the fifth pulley 151A is partially wound on said sixth pulley 151B, seventh pulley 151C, ninth pulley 152 and eighth pulley 151D forming a sort of "U" in the stretch between the seventh pulley 151C and the eight pulley 151D.

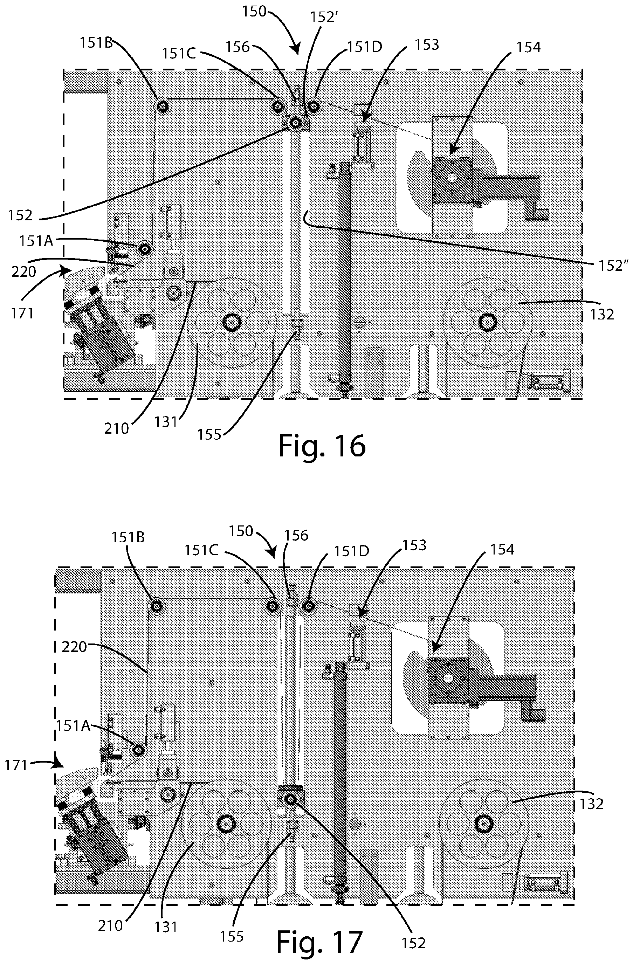

At the top and bottom of the vertical guide 152" are installed a third optical sensor 156 and a fourth optical sensor 155 for detecting, respectively, when the support 152' with the ninth pulley 152 is in the highest allowed position (see Figure 16) or in the lowest allowed position (see Figure 17).

Downstream of the eighth pulley 151D there is, on the same frame 110, a synchronous gear motor 154 for the pulling and, therefore, recovery of the synchronous gear motor 220 from the eighth pulley 151D.

Between the eighth pulley 151D and the synchronous gear motor 154 there is a stopping device 153 for stopping, selectively, the protective film 220.

Also integrated in the machine 100 is a cleaning system 160, located beneath the application system 170, for preliminarily cleaning the surfaces of the rim which is to receive the weights 211 from the application device 171.

In particular, the cleaning system 160 includes pneumatic piston-cylinder system 162 mounted on the frame 110 and acting along a predetermined axis substantially parallel to the axis along which the above-mentioned slide 176 moves.

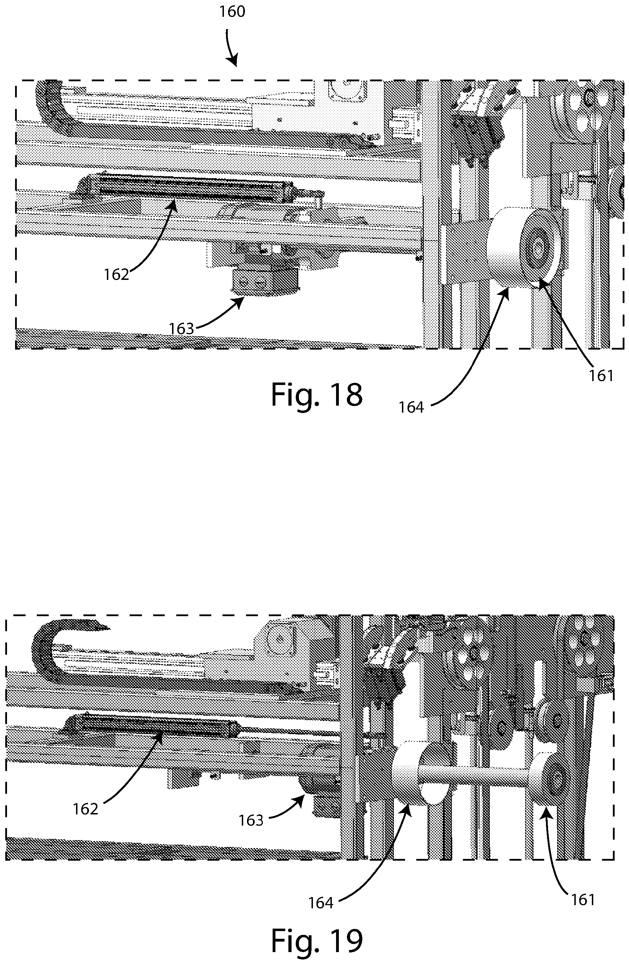

The piston of the pneumatic piston-cylinder system 162 is connected to a brush 161 with a cylindrical substantially shape which can be rotated about the relative axis by means of an asynchronous motor 163 and is movable along said predetermined axis between a rest position (see Figure 18) and an operating position (see Figure 19) as a result of the movement of the pneumatic piston-cylinder system 162.

In the cleaning system 160 there is also a washing device 164 with a hollow form mounted on the frame 110 in a position such as to receive the brush 161 when positioned in the relative rest position (see Figure 18).

The washing device 164 comprises a nozzle which is able to spray a high evaporation diluent on the brush 161, by means of a feed pump connected to it.

A collection tank also allows the evacuation of the diluent released by the washing system.

The operation of the machine 100 occurs as described below.

When the weights accumulating system 130 is in the configuration of minimum storage shown in Figure 4, the unwinding of the reel 121 by means of the gear motor 124 and the lowering of the movable bar 133' by means of the piston-cylinder system 136 until the relative lowered position (see Figure 5), detected by the second optical sensor 137, are carried out simultaneously.

At this point, the unwinding of the reel 121 is interrupted and the strip of weights 210 is locked by activating the stopping device 135, whilst the movable bar 133' is raised up to the respective raised position (see Figure 6) by retraction of the piston-cylinder system 136.

As the weights 211 are gradually requested by the application system 170, the stretch of the strip of weights 210 between the first upper pulley 132 and the second upper pulley 131 is raised until the first optical sensor 138 detects the reaching of the respective raised position of the strip of weights 210 (see Figure 4), corresponding to the configuration of minimum storage of the weights accumulating system 130.

At this point, the operating cycle described above is repeated, again releasing the strip of weights 210 to the stopping device 135, the unwinding of the reel 121 to the gear motor 124 and also the elongation of the piston-cylinder system 136 with the consequent lowering of the movable bar 133' with the first lower pulley 134 and the second lower pulley 133 until reaching the relative lowered position (see Figure 5) detected by the second optical sensor 137.

The operation of the weights accumulating system 130 is therefore such as to allow the operator to change the reel 121, when it is empty, at any time that the gear motor 124 is in the stop condition and the strip of weights 210 is gripped, that is, locked, by the stopping means 135, without having to interrupt the operation of the machine 100.

The application of the weights 211 to the rim of the wheel by the application system 170 is, on the other hand, carried out by positioning, preliminarily, the wheel to be balanced at the application device 171.

Subsequently, the weights 211 necessary are loaded on the first supporting element 172A and on the second supporting element 172B, moving each of the weights in front of the above-mentioned separation and cutting system 180 by means of the slide 176.

The first supporting element 172A and the second supporting element 172B are now moved towards the rim by the activation of the first linear actuator 179A and the secondo linear actuator 179B, so as to allow the adhesive layer of the weights 211 to adhere to the surfaces of the rime previously identified by a balancing station, not shown and not forming part of the invention.

As the weights 211 are gradually requested by the application system 170 due to the relative application on the rims, the protective film 220 which is separated from the relative weights 211 in the separation and cutting system 180 is gradually accumulated in the secondo accumulating system 150.

In particular, when the fourth optical sensor 155 detects that the support 152' with the ninth pulley 152 has reached the lowest allowed position (see Figure 17) as a result of its continuous lowering due to the progressive separation of the protective film 220 from the relative weights 211, the protective film 220 is released by the stopping device 153 and the synchronous gear motor 154 is activated, which, pulling towards itself the protective film 220, will determine the continuous recovery of the latter and, at the same time, also the raising of the support 152' and the ninth pulley 152 up to the respective position of maximum height (see Figure 16), detected by the third optical sensor 156, corresponding to the configuration of minimum storage of the second accumulating system 150.

Once the ninth pulley 152 has reached the position of maximum height, the synchronous gear motor 154 is stopped and the protective film 220 is gripped by the above-mentioned stopping device 153.

The operating cycle of the second accumulating system 150 described above repeats itself until weights 211 are requested by the application system 170, that is, as the protective film 220 gradually separates from the weights 211.

The operation of the second accumulating system 150 therefore allows the operator to pick up the protective film 220 at any time in which the synchronous gear motor 154 is deactivated and the protective film 220 is gripped, that is locked, by the stopping means 153, without having to interrupt the operation of the machine 100.

The machine 100 according to the invention therefore allows efficient automation of all the operations necessary for application of the weights 211 on the rim, reducing the machine stoppages to a minimum, which will in fact be limited to only the cases of maintenance.

This obviously allows the productivity of the machine to be significantly increased.

The preferred embodiments have been described above and variants to the invention have been suggested, but it shall be understood that the invention may be modified and/or adapted by experts in the field without thereby departing from the scope of the inventive concept, as defined in the claims herein.

## Claims

1. Machine (100) for applying at least one counterweight to a rim of a wheel to balance said wheel, wherein said at least one counterweight is a part of a strip (210) comprising a plurality of counterweights (211), which are placed next to one another and provided with a respective adhesive side, and a protective film (220) which is removable and placed on said adhesive side of said counterweights; said machine (100) comprising:
a frame (110);
a first accumulating system (130) which is configured to accumulate said strip (210) and comprises at least one first element (131, 132) having a fixed position in said frame (110), on which said strip (210) is able to be at least partly wound, and at least one second element (133, 134), on which said strip (210) is able to be at least partly wound, which is movable relative to said at least one first element (131, 132) between a position of minimum storage of said strip (210), where said at least one second element (133, 134) is at a first distance from said at least one first element (131, 132), and a position of maximum storage of said strip (210) where said at least one second element (133, 134) is at a second distance, which is larger than said first distance, from said at least one first element (131, 132);
separating means (181) which are configured to progressively separate, in use, said protective film (220) from said plurality of counterweights (211) and operatively placed downstream of said first accumulating system (130);
applying means (170) which are configured to apply, in use, at least one counterweight (211) to a rim and operatively placed downstream of said separating means (181); and
a second accumulating system (150) which is operatively placed downstream of said separating means (181) and configured to accumulate, in use, said protective film (220), said second accumulating system (150) comprising at least one third element (151C, 151D) having a fixed position in said frame (110), on which said protective film (220) is able to be at least partly wound, and at least one fourth element (152), on which said protective film (220) is able to be at least partly wound, which is movable relative to said at least one third element (151C, 151D) between a position of minimum storage of said protective film (220), where said at least one fourth element (152) is at a third distance from said at least one third element (151C, 151D), and a position of maximum storage of said protective film (220) where said at least one fourth element (152) is at a fourth distance, which is larger than said third distance, from said at least one third element (151C, 151D), such that, in use, said first accumulating system (130) allows storing said plurality of counterweights (211) and said second accumulating system (150) allows storing said protective film (220) based on the frequency of application of said counterweights (211) on said rim by said applying means (170).

2. Machine (100) according to claim 1, **characterized in that** it comprises advancing means (140) to make, in use, said strip (210) advance from said first accumulating system (130) to said separating means (181), and first stopping means (135) to stop said strip (210) advancing towards said separating means (181).

3. Machine (100) according to claim 2, **characterized in that** it comprises a first sensor (138) for detecting the time when said first accumulating system (130) is in the configuration of minimum storage of said strip (210), and a second sensor (137) for detecting the time when said first accumulating system (130) is in the configuration of maximum storage of said strip (210), said first sensor (138) and said second sensor (137) being operatively connected with said advancing means (140) and said first stopping means (135).

4. Machine (100) according to any one of preceding claims, **characterized in that** it comprises pulling means (154) to pull, in use, said protective film (220) making the protective film advance from said separating means (181) to said second accumulating system (150), and second stopping means (153) to stop said protective film (220) advancing from said separating means (181) to said second accumulating system (150).

5. Machine (100) according to claim 4, **characterized in that** it comprises a third sensor (156) for detecting the time when said second accumulating system (150) is in the configuration of minimum storage of said protective film (220), and a fourth sensor (155) for detecting the time when said second accumulating system (150) is in the configuration of maximum storage of said protective film (220), said third sensor (156) and said fourth sensor (155) being operatively connected with said pulling means (154) and to said second stopping means (153).

6. Machine (100) according to any one of preceding claims, **characterized in that** it comprises a cutting device (174) which is operatively placed between said separating means (181) and said applying means (170) and configured to cut said plurality of counterweights (211) before applying at least one counterweight (211) to said rim.

7. Machine (100) according to claim 6, **characterized in that** said cutting device (174) comprises a blade which is connectable with an electric power source to allow said blade to heat up when an electric power passes through said blade.

8. Machine (100) according to any one of preceding claims, **characterized in that** said applying means (170) comprise at least one support (172A, 172B) which is provided with a substantially arc-shaped resting surface which is configured for receiving at least one counterweight (211), at least one magnetic element (173A, 173B) being provided in said resting surface to hold, in use, said at least one counterweight (211) on said resting surface.

9. Machine (100) according to claim 8, **characterized in that** said at least one support (172A, 172B) is movable along a first axis which is substantially orthogonal to an advancing direction of said plurality of counterweights (211) from said separating means (181) towards said at least one support (172A, 172B).

10. Machine (100) according to claim 8 or 9, **characterized in that** said applying means (170) comprise actuating means (179A, 179B) which are connected with said at least one support (172A, 172B) and configured to move said at least one support (172A, 172B) along a second axis such as to move close to or away from, in use, said at least one support (172A, 172B) relative to said rim.

## Patentansprüche

1. Maschine (100) zum Anbringen mindestens eines Gegengewichts an einer Felge eines Rades, um das besagte Rad auszuwuchten, wobei das besagte mindestens eine Gegengewicht ein Teil eines Streifens (210) ist, der eine Vielzahl von Gegengewichten (211) umfasst, die nebeneinander angeordnet und mit einer entsprechenden Klebeseite versehen sind, und einer Schutzfolie (220), die entfernbar und auf der besagten Klebeseite der besagten Gegengewichte angeordnet ist; wobei die besagte Maschine (100) umfasst:
einen Rahmen (110); ein erstes Sammelsystem (130), das zum Sammeln des besagten Streifens (210) konfiguriert ist und mindestens ein erstes Element (131, 132) mit einer festen Position in dem Rahmen (110) umfasst, auf dem der Streifen (210) zumindest teilweise aufgewickelt werden kann, und zumindest ein zweites Element (133, 134), auf das der besagte Streifen (210) zumindest teilweise aufgewickelt werden kann, das relativ zu dem zumindest einen ersten Element (131, 132) beweglich ist zwischen einer Position der minimalen Aufbewahrung des Streifens (210), wo das mindestens eine zweite Element (133, 134) sich in einem ersten Abstand von dem mindestens einen ersten Element (131, 132) befindet, und
einer Position der maximalen Aufbewahrung des Streifens (210), wobei sich das mindestens eine zweite Element (133, 134) in einem zweiten Abstand, der größer als der erste Abstand ist, von dem mindestens einen ersten Element (131, 132) befindet; eine Vorrichtung zum Trennen (181), die so konfiguriert ist, dass sie im Gebrauch die Schutzfolie (220) nach und nach von der Vielzahl von Gegengewichten (211) trennt, und betriebsmäßig stromabwärts des ersten Sammelsystems (130) angeordnet ist; eine Vorrichtung zum Anbringen (170), die so konfiguriert ist, dass sie im Gebrauch mindestens ein Gegengewicht (211) an einer Felge anbringt und
betriebsmäßig stromabwärts von der Trennvorrichtung (181) angeordnet ist; und ein zweites Sammelsystem (150), das betriebsmäßig stromabwärts von der Trenneinrichtung (181) angeordnet und so konfiguriert ist, dass es im Gebrauch die Schutzfolie (220) sammelt, wobei das besagte zweite Sammelsystem (150) mindestens ein drittes Element (151C, 151D) umfasst, mit einer festen Position in dem Rahmen (110), auf dem die besagte Schutzfolie (220) zumindest teilweise aufgewickelt werden kann, und mindestens einem vierten Element (152), auf dem sich die Schutzfolie (220) zumindest teilweise aufwickeln lässt im Verhältnis zu dem besagten mindestens einen dritten Element (151C, 151D), zwischen einer Position minimaler Lagerung der Schutzfolie (220), wobei sich das besagte mindestens eine vierte Element (152) in einem dritten Abstand von dem mindestens einen dritten Element (151C, 151D) befindet, und einer Position maximaler Lagerung der Schutzfolie (220), wobei das mindestens eine vierte Element (152) in einem vierten Abstand, der größer als der dritte Abstand ist, von dem mindestens einen dritten Element (151C, 151D), so dass das erste Sammelsystem (130) im Gebrauch das Lagern der besagten Vielzahl von Gegengewichten (211) und das besagte zweite Sammelsystem (150) das Lagern der besagten Schutzfolie (220) aufgrund der Anwendungshäufigkeit der besagten Gegengewichte (211) auf der besagten Felge durch die besagte Aufbringeinrichtung (170) ermöglicht.

2. Maschine (100) nach Anspruch 1, **dadurch gekennzeichnet, dass** sie eine Vorschubvorrichtung (140) umfasst, um im Betrieb den besagten Streifen (210) von dem besagten ersten Sammelsystem (130) zu der besagten Trennvorrichtung (181) vorrücken zu lassen, und eine erste Anhaltevorrichtung (135) zum Anhalten des besagten Streifens (210), der sich zu der besagten Trennvorrichtung (181) bewegt.

3. Maschine (100) nach Anspruch 2, **dadurch gekennzeichnet, dass** sie einen ersten Sensor (138) zum Erfassen der Zeit umfasst, zu der das besagte erste Sammelsystem (130) sich in der Konfiguration der minimalen Lagerung des besagten Streifens (210) befindet, und einen zweiten Sensor (137) zum Erfassen der Zeit umfasst, zu der das besagte erste Sammelsystem (130) sich in der Konfiguration der maximalen Speicherung des besagten Streifens (210) befindet, wobei der besagte erste Sensor (138) und der besagte zweite Sensor (137) operativ mit der besagten Vorschubeinrichtung (140) und der besagten ersten Anhaltevorrichtung (135) verbunden sind.

4. Maschine (100) nach einem der vorangehenden Ansprüche, **dadurch gekennzeichnet, dass** sie eine Zugeinrichtung (154) zum Ziehen der besagten Schutzfolie (220) im Gebrauch umfasst, wodurch die Schutzfolie von der besagten Trenneinrichtung (181) zum zweiten besagten Sammelsystem (150) vorgeschoben wird, und eine zweite Anhaltevorrichtung (153) zum Anhalten der besagten Schutzfolie (220), die sich von der besagten Trenneinrichtung (181) zum besagten zweiten Sammelsystem (150) fortbewegt.

5. Maschine (100) nach Anspruch 4, **dadurch gekennzeichnet, dass** sie einen dritten Sensor (156) zum Erfassen der Zeit umfasst, zu der das besagte zweite Sammelsystem (150) sich in der Konfiguration der minimalen Speicherung der besagten Schutzfolie (220) befindet, und einen vierten Sensor (155) zum Erfassen der Zeit, zu der das besagte zweite Sammelsystem (150) sich in der Konfiguration der maximalen Speicherung der besagten Schutzfolie (220) befindet, wobei der besagte dritte Sensor (156) und der besagte vierte Sensor (155) operativ mit der besagten Zugeinrichtung (154) und der besagten zweiten Anhaltevorrichtung (153) verbunden sind.

6. Maschine (100) nach einem der vorangehenden Ansprüche, **dadurch gekennzeichnet, dass** sie eine Schneidevorrichtung (174) umfasst, die operativ zwischen der besagten Trenneinrichtung (181) und der besagten Aufbringeinrichtung (170) angeordnet und so konfiguriert ist, dass sie die besagte Vielzahl von Gegengewichten (211) schneidet, bevor mindestens ein Gegengewicht (211) an der besagten Felge angebracht wird.

7. Maschine (100) nach Anspruch 6, **dadurch gekennzeichnet, dass** die besagte Schneidvorrichtung (174) eine Klinge umfasst, die mit einer elektrischen Energiequelle verbunden werden kann, um zu ermöglichen, dass sich die besagte Klinge erwärmt, wenn eine elektrische Energie durch die besagte Klinge fließt.

8. Maschine (100) nach einem der vorhergehenden Ansprüche, **dadurch gekennzeichnet, dass** die besagte Aufbringungsvorrichtung (170) mindestens eine Stütze (172A, 172B) umfasst, die mit einer im Wesentlichen bogenförmigen Auflagefläche versehen ist, die zum Aufnehmen mindestens eines Gegengewichtes (211) konfiguriert ist, wobei mindestens ein magnetisches Element (173A, 173B) in der besagten Auflagefläche vorgesehen ist, um im Gebrauch das besagte mindestens eine Gegengewicht (211) auf der besagten Auflagefläche zu halten.

9. Maschine (100) nach Anspruch 8, **dadurch gekennzeichnet, dass** die besagte mindestens eine Stütze (172A, 172B) entlang einer ersten Achse bewegbar ist, die im Wesentlichen orthogonal zu einer Vorschubrichtung der besagten Vielzahl von Gegengewichten (211) von der besagten Trenneinrichtung (181) zu dem besagten mindestens einen Träger (172A, 172B) angeordnet ist.

10. Maschine (100) nach Anspruch 8 oder 9, **dadurch gekennzeichnet, dass** die Aufbringungsvorrichtung (170) eine Betätigungsvorrichtung (179A, 179B) umfasst, die mit dem besagten mindestens einen Träger (172A, 172B) verbunden und konfiguriert sind, um die besagte mindestens eine Stütze (172A, 172B) entlang einer zweiten Achse zu bewegen, um sich im Gebrauch nahe an oder weg von der besagten mindestens einen Stütze (172A, 172B) im Verhältnis zur besagten Felge zu bewegen.

## Revendications

1. Machine (100) pour appliquer au moins un contrepoids sur une jante d'une roue afin d'équilibrer ladite roue, dans laquelle ledit au moins un contrepoids fait partie d'une bande (210) comprenant une pluralité de contrepoids (211), qui sont placés les uns à côté des autres et pourvus d'un côté adhésif respectif, et un film protecteur (220) qui est amovible et placé sur ledit côté adhésif desdits contrepoids; ladite machine (100) comprenant:
un cadre (110);
un premier système d'accumulation (130) qui est configuré pour accumuler ladite bande (210) et comprend au moins un premier élément (131, 132) ayant une position fixe dans ledit cadre (110), sur lequel ladite bande (210) peut être au moins partiellement enroulée,
et au moins un deuxième élément (133, 134), sur lequel ladite bande (210) peut être au moins partiellement enroulée, qui est mobile par rapport audit au moins un premier élément (131, 132) entre une position de stockage minimum de ladite bande (210), où ledit au moins un deuxième élément (133, 134) est à une première distance dudit au moins un premier élément (131, 132),
et une position de stockage maximum de ladite bande (210) où ledit au moins un deuxième élément (133, 134) est à une deuxième distance, qui est plus grande que ladite première distance, dudit au moins un premier élément (131, 132); des moyens de séparation (181) qui sont configurés pour séparer progressivement, en utilisation, ledit film protecteur (220) de ladite pluralité de contrepoids (211) et placés de manière opérationnelle en aval dudit premier système d'accumulation (130);
des moyens d'application (170) qui sont configurés pour appliquer, en utilisation, au moins un contrepoids (211) à une jante et placés de manière opérationnelle en aval desdits moyens de séparation (181); et
un deuxième système d'accumulation (150) qui est placé de manière opérationnelle en aval desdits moyens de séparation (181) et configuré pour accumuler, en utilisation, ledit film protecteur (220), ledit deuxième système d'accumulation (150) comprenant au moins un troisième élément (151C, 151D) ayant une position fixe dans ledit cadre (110), sur lequel ledit film protecteur (220) peut être au moins partiellement enroulé, et au moins un quatrième élément (152), sur lequel ledit film protecteur (220) peut être au moins partiellement enroulé, qui est mobile par rapport audit au moins un troisième élément (151C, 151D) entre une position de stockage minimum dudit film protecteur (220), où ledit au moins un quatrième élément (152) est à une troisième distance dudit au moins un troisième élément (151C, 151D), et une position de stockage maximum dudit film protecteur (220) où ledit au moins un quatrième élément (152) est à une quatrième distance, qui est plus grande que ladite troisième distance, dudit au moins un troisième élément (151C, 151D), de sorte que, en utilisation, ledit premier système d'accumulation (130) permet de stocker ladite pluralité de contrepoids (211) et ledit deuxième système d'accumulation (150) permet de stocker ledit film protecteur (220) sur la base de la fréquence d'application desdits contrepoids (211) sur ladite jante par lesdits moyens d'application (170).

2. Machine (100) selon la revendication 1, **caractérisée en ce qu'**elle comprend un moyen d'avancement (140) pour faire, en utilisation, avancer ladite bande (210) dudit premier système d'accumulation (130) vers ledit moyen de séparation (181), et un premier moyen d'arrêt (135) pour arrêter ladite bande (210) avançant vers ledit moyen de séparation (181).

3. Machine (100) selon la revendication 2, **caractérisée en ce qu'**elle comprend un premier capteur (138) pour détecter le moment où ledit premier système d'accumulation (130) est dans la configuration de stockage minimum de ladite bande (210), et un deuxième capteur (137) pour détecter le moment où ledit premier système d'accumulation (130) est dans la configuration de stockage maximum de ladite bande (210), ledit premier capteur (138) et ledit deuxième capteur (137) étant connectés de manière opérationnelle avec ledit moyen d'avancement (140) et ledit premier moyen d'arrêt (135) .

4. Machine (100) selon l'une quelconque des revendications précédentes, **caractérisée en ce qu'**elle comprend des moyens de traction (154) pour tirer, en utilisation, ledit film protecteur (220) en faisant avancer le film protecteur depuis lesdits moyens de séparation (181) vers ledit deuxième système d'accumulation (150), et des deuxièmes moyens d'arrêt (153) pour arrêter ledit film protecteur (220) avançant depuis lesdits moyens de séparation (181) vers ledit deuxième système d'accumulation (150).

5. Machine (100) selon la revendication 4, **caractérisée en ce qu'**elle comprend un troisième capteur (156) pour détecter le moment où ledit deuxième système d'accumulation (150) est dans la configuration de stockage minimum dudit film protecteur (220), et un quatrième capteur (155) pour détecter le moment où ledit deuxième système d'accumulation (150) est dans la configuration de stockage maximum dudit film protecteur (220), ledit troisième capteur (156) et ledit quatrième capteur (155) étant reliés de manière opérationnelle auxdits moyens de traction (154) et auxdits deuxièmes moyens d'arrêt (153).

6. Machine (100) selon l'une quelconque des revendications précédentes, **caractérisée en ce qu'**elle comprend un dispositif de coupe (174) qui est placé de manière opérationnelle entre ledit moyen de séparation (181) et ledit moyen d'application (170) et configuré pour couper ladite pluralité de contrepoids (211) avant d'appliquer au moins un contrepoids (211) sur ladite jante.

7. Machine (100) selon la revendication 6, **caractérisée en ce que** ledit dispositif de coupe (174) comprend une lame qui peut être connectée à une source d'énergie électrique pour permettre à ladite lame de chauffer lorsqu'une énergie électrique passe à travers ladite lame.

8. Machine (100) selon l'une quelconque des revendications précédentes, **caractérisée en ce que** lesdits moyens d'application (170) comprennent au moins un support (172A, 172B) qui est pourvu d'une surface de repos sensiblement en forme d'arc qui est configurée pour recevoir au moins un contrepoids (211), au moins un élément magnétique (173A, 173B) étant prévu dans ladite surface de repos pour maintenir, en utilisation, ledit au moins un contrepoids (211) sur ladite surface de repos.

9. Machine (100) selon la revendication 8, **caractérisée en ce que** ledit au moins un support (172A, 172B) est mobile le long d'un premier axe qui est sensiblement orthogonal à une direction d'avancement de ladite pluralité de contrepoids (211) depuis ledit moyen de séparation (181) vers ledit au moins un support (172A, 172B) .

10. Machine (100) selon la revendication 8 ou 9, **caractérisée en ce que** lesdits moyens d'application (170) comprennent des moyens d'actionnement (179A, 179B) qui sont reliés audit au moins un support (172A, 172B) et configurés pour déplacer ledit au moins un support (172A, 172B) le long d'un deuxième axe de manière à rapprocher ou éloigner, en utilisation, ledit au moins un support (172A, 172B) par rapport à ladite jante.
